# EUROPEAN PATENT APPLICATION

(11) **EP 2 053 752 A2**
(43) Date of publication of application: **29.04.2009**
(21) Application number: 08104283.0
(22) Date of filing: 06.06.2008
(51) Int. Cl.: H04B 1/04, H01R 31/06

(54) **Wireless connector**

(30) Priority: 23.10.2007 US 877285 P
(71) Applicant: Omega Engineering, Inc., Stamford, CT 06907-0047 (US)
(72) Inventor: Hollander, Milton, Stamford, CT 06906 (US); Macchiarelli, Michael A. jR, Shelton, CT 06484 (US)
(74) Representative: Schmit, Christian Norbert Marie

(57) **Abstract**

A connector includes circuitry for processing a signal and a transmitter for transmitting the processed signal. In another embodiment, a connector includes a sensor for providing a signal, circuitry for processing the signal, and a transmitter for transmitting the processed signal. A further embodiment includes a connector system having a first connector with circuitry for processing a signal and a transmitter for transmitting the processed signal, and a second connector having a receiver for receiving the transmitted signal. Yet another embodiment provides a system for test and measurement including a connector including circuitry for processing a signal and a transmitter for transmitting the processed signal, and an instrument including a receiver for receiving the transmitted signal.

## Description

### BACKGROUND

Test and measurement devices generally include a sensor terminated with a connector. The connector is in turn connected to another connector or an instrument by wire, fiber optic, or other hardwired connection. In a measurement or control application utilizing multiple sensors, organizing and attaching the various hardwired connections may be tedious and subject to error. The extent that a particular characteristic may be measured or controlled may be limited by the length or number of required connections.

It would be advantageous to be able to utilize multiple sensors without the drawbacks of multiple hardwired connections.

### SUMMARY

In one embodiment, a connector includes circuitry for processing a signal and a transmitter for transmitting the processed signal.

In another embodiment, a connector includes a sensor for providing a signal, circuitry for processing the signal, and a transmitter for transmitting the processed signal.

A further embodiment includes a connector system having a first connector with circuitry for processing a signal and a transmitter for transmitting the processed signal, and a second connector having a receiver for receiving the transmitted signal.

Yet another embodiment provides a system for test and measurement including a connector including circuitry for processing a signal and a transmitter for transmitting the processed signal, and an instrument including a receiver for receiving the transmitted signal.

### BRIEF DESCRIPTION OF THE DRAWINGS

The foregoing aspects and other features of the presently disclosed embodiments are explained in the following description, taken in connection with the accompanying drawings, wherein:

Figure 1 shows a schematic diagram of a connector suitable for practicing the disclosed embodiments;

Figure 2 shows a block diagram of circuitry that may be utilized in the disclosed embodiments;

Figure 3 shows a block diagram of processing circuitry according to the disclosed embodiments;

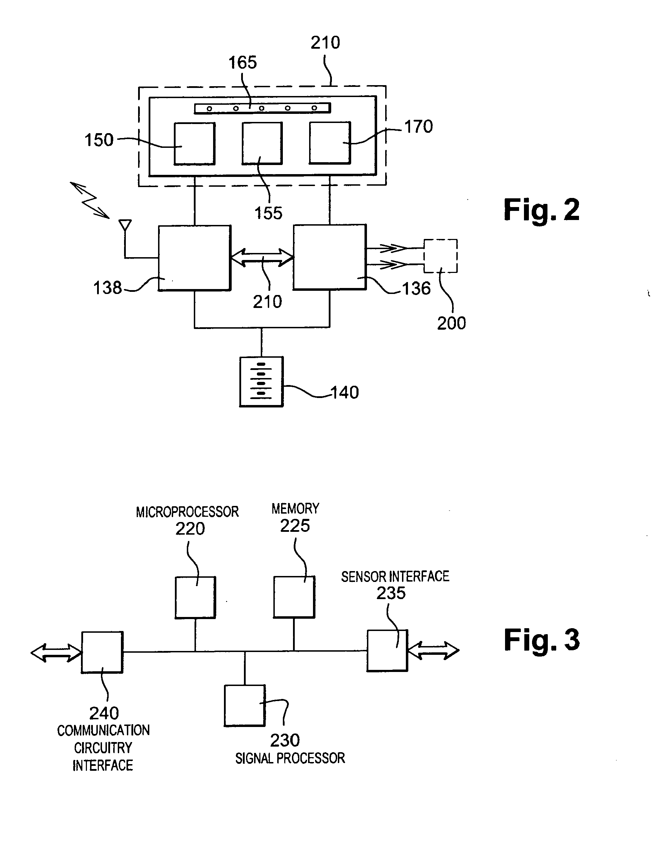

Figure 3 shows an embodiment with a built in or self contained sensor;

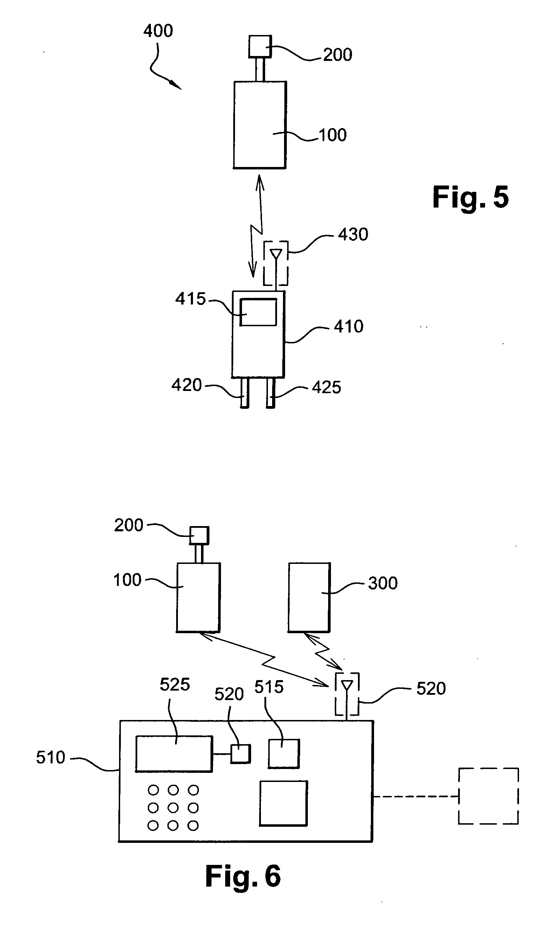

Figure 5 shows an embodiment that includes a connector system for measurement data communication; and

Figure 6 shows another embodiment where a connector communicates directly with an instrument, meter, or other suitable equipment.

### DETAILED DESCRIPTION

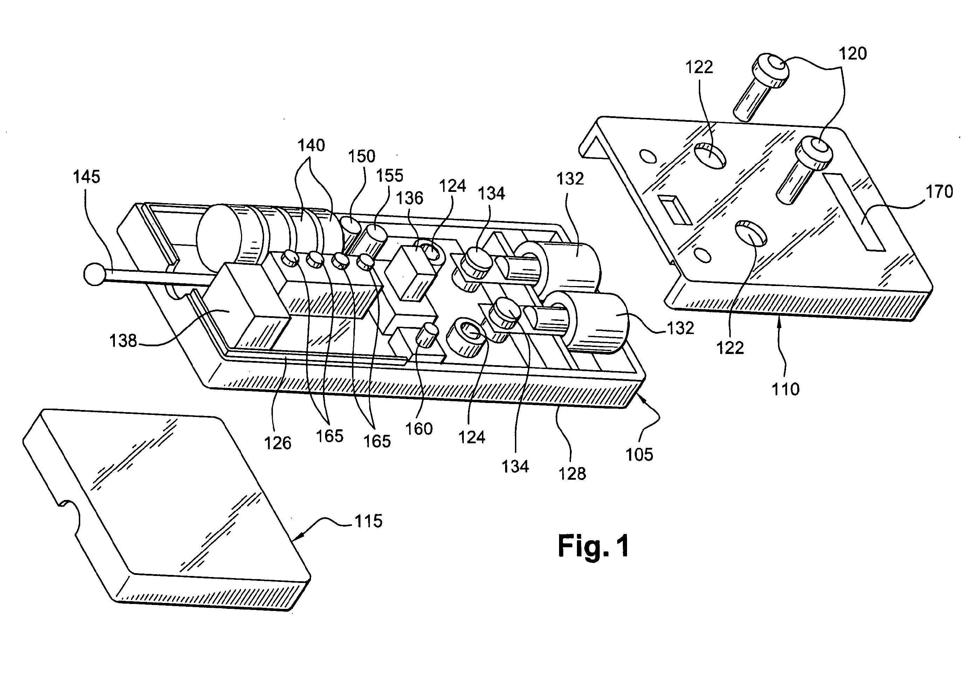

Figure 1 shows a schematic diagram of a connector 100 suitable for practicing the embodiments disclosed herein. Although the presently disclosed embodiments will be described with reference to the drawings, it should be understood that they may be embodied in many alternate forms. It should also be understood that In addition, any suitable size, shape or type of elements or materials could be used.

The connector 100 generally includes circuitry for processing a signal and a transmitter for transmitting the processed signal.

In Figure 1, the connector 100 may include a base 105, a first cover portion 110, and a second cover portion 115. The first cover portion 110 may be secured in position on the base 105 by two screws 120 which pass through holes 122 in the first cover portion 110 and engage threaded bosses 124 of the base 105. The cover portion 115 may be secured on the base 105 by any conventional means, for example by making a sliding fit on side wall ribbing 126 which may be appropriately undercut.

Base 105 may have an encircling wall 128 which may be cut away (not shown) at a right-hand end 130 to permit connection of a sensor to appropriate contacts 132 mounted on respective terminal posts 134 secured on the base 105.

Processing circuitry 136 may also be optionally provided within connector 100. Processing circuitry 136 may be implemented using hardware components, one or more processors running one or more programs, or a combination of both and may be re-programmable to perform any suitable processing operations.

Communication circuitry 138 may also be included within connector 100 for transmitting signals provided by the sensor or signals output by the processing circuitry 136. In one embodiment, communication circuitry 138 may be capable only of transmitting signals. In another embodiment, communication circuitry 138 may include transceiver circuitry capable of two-way communication, that is, both transmitting information and receiving information. Communication circuitry 138 may be capable of receiving commands from a remote device and optionally in combination with processing circuitry 136 performing the received commands or operations based on the received commands. Communication circuitry 138 may also alter processing or communication operations based on the received commands. In addition, communication circuitry 138 optionally in combination with processing circuitry 136 may be capable of transmitting commands for controlling another device communicating with connector 100.

Communication circuitry 138 may provide wireless communication using any of a variety of different physical and protocol layer communication methods. For example, the communication technology may include optical, infrared, radio transmission, RFID, or any other suitable communication technology, and may incorporate IrDA, IEEE 802.11, 802.15, Bluetooth, PCS or any other suitable communication method or standard. The ZigBee^{™} standard, based on IEEE 802.15 may also be utilized because of its low power requirements, built in recognition capabilities, high reliability and relatively small packaging size. In an exemplary embodiment communication circuitry 138 may be a ZigBee end device. In other exemplary embodiments communication circuitry 138 may be a ZigBee coordinator or a ZigBee router.

In one embodiment, processing circuitry 136 and communication circuitry 138 may be combined together as a single module.

Connector 100 may also have a power supply 140 that may include one or more batteries for providing power to processing circuitry 136, communication circuitry 138, the sensor, or any other function requiring power.

An optional emitting device 145 may be connected to communication circuitry 138 to extend the range of communication. Emitting device 145 may extend from connector 100 as shown or may be enclosed by connector 100. In some embodiments, emitting device 145 may be for example, an antenna, an optical emitter, or any other suitable emitting device. The connector 100 also may optionally have various indicators and controls such as a battery status indicator 150, a transmit/receive indicator 155, an on/off switch 160, adjustable components and additional switches 165 for calibration and for controlling the processing circuitry 136, communication circuitry 138, and a display 170.

In exemplary embodiments, when assembled, connector 100 may have a form factor similar to a standard, standard ceramic, miniature, or miniature ceramic thermocouple connector body. While processing circuitry 136, communication circuitry 138, emitting device 145, the various indicators and controls, and power supply 140 are shown as having a particular size and shape, it should be understood that they may have any suitable size and shape, may be miniaturized, may be arranged together in various combinations, and may be combined in a single package or device.

Figure 2 shows a block diagram of the circuitry of connector 100. The circuitry includes processing circuitry 136, communication circuitry 138, optional indicators and controls 215, the optional emitting device 145, and a power supply 140. The circuitry generally operates to measure, process, collect, store, and transmit data associated with connector 100 and with signals from sensor 200.

Figure 3 shows a block diagram of processing circuitry 136. Processing circuitry 136 may include a microprocessor 220, a memory device 225, a signal processor 230, a sensor interface 235, and an interface 240 to communication circuitry 138. Microprocessor 220 may perform control functions, time keeping and recording functions, connector diagnostic functions, signal processing functions and data storage functions according to programs stored in memory device 225. Memory device 225 may be a computer readable medium including magnetic, optical, semiconductor, or other storage technology. Memory device 225 may store programs which cause the microprocessor to operate according to the disclosed embodiments. The signal processor 230 may process signals from the sensor 200 either independently or under control of the microprocessor 220.

The microprocessor 220 may monitor and control the communication circuitry 138 through the interface 240. For example, the microprocessor 220 may instruct the communication circuitry 138 to establish communication with another device. The microprocessor 220 may provide the communication circuitry 138 with data from the sensor 200 or the signal processor 230 and instruct the communication circuitry 138 to transmit the data, for example, on a periodic basis. In the event that communication with the other device is lost, the microprocessor 220 may instruct the communication circuitry 138 monitor the connection and to re-establish communication when the other device becomes available and resume data transmission.

The microprocessor 220 may also operate to store data related to the signals from sensor 200 or from signal processor 230. For example, signals from sensor 200 and data from signal processor 230 may be accumulated and stored in memory 225 for future transmission. In one embodiment, signals and data may be accumulated and stored in memory 225 and then transmitted when instructed by microprocessor, for example, in response to an event, on a particular date, or in response to a switch closure or a command received through the communication circuitry 138. Using the example above, signals from sensor 200 may be accumulated and stored in memory 225 during periods of lost communication and then sent when communication is re-established.

In some embodiments, microprocessor 220 or signal processor 230, alone or in combination may process or condition the signals from sensor 200. For example, microprocessor 220 or signal processor 230 may filter, amplify, compress, apply various algorithms or functions, or otherwise manipulate the signals from sensor 200. As another example microprocessor 220 or signal processor 230, alone or in combination may process or condition the signals from sensor 200 to accommodate characteristics of a device receiving the transmitted data. The processed or conditioned signals may be transmitted or stored and transmitted as described above. The microprocessor 220 and the signal processor may also provide other types of data for transmission or storage and transmission. For example, measurement time stamps for signals from sensor 200, a connector serial number, a functional state of the connector derived from running diagnostic functions, power supply information, location in real time, etc.

Sensor 200 may be any transducer capable of converting a measurable characteristic to a signal for use by the connector. For example, sensor 200 may include a pressure, temperature, humidity, gas, pH, infrared, ultraviolet, visible light, voltage, current, power, conductivity, strain, load or acceleration measurement device. In an example where sensor 200 is a thermocouple, such as a type-K thermocouple, microprocessor 220 or signal processor 230, alone or in combination may process or condition the signals from sensor 200 to appear as another type of thermocouple, such as a type-J thermocouple while maintaining temperature accuracy. As a result, a J-type receiving device, such as a panel meter may display the proper temperature regardless of the type of thermocouple used Thus, different types of sensors may be used as measuring devices for different types of receiving devices.

Returning to Figure 2, processing circuitry 136 may be connected to communication circuitry 138 through a signal path 210. Both processing circuitry 136 and communication circuitry 138 may be connected to the optional indicators and controls 215, including indicators 150, 155, display 170, and adjustable components 165. Emitting device 145 may be connected to communication circuitry 138. Power supply 140 may supply power to all components requiring power.

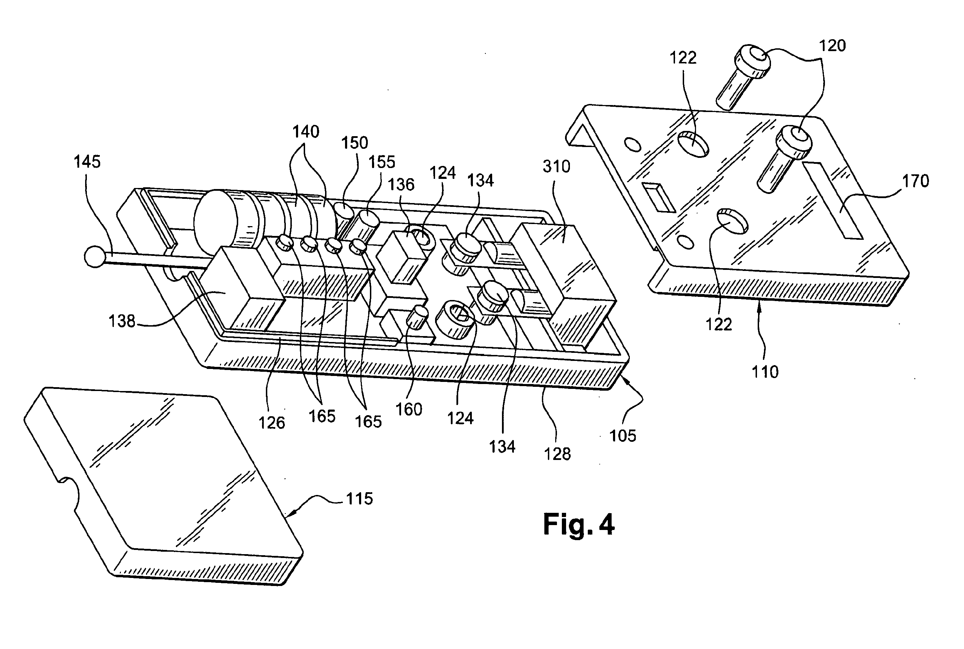

Figure 4 shows an embodiment of a connector 300 with a built in or self contained sensor 310. The sensor 310 may be enclosed by connector 300 or may extend beyond the boundaries of the connector. The connector 300 includes processing circuitry 136 and communication circuitry 138 and may optionally include indicators and controls 210, including indicators 150, 155, display 170, adjustable components 165, and emitting device 145.

Figure 5 shows another embodiment that includes a connector system 400 for measurement data communication. Sensor 200 is connected to and provides measurement signals to connector 100. Connector 100 may process the measurement signals and may transmit the measurement signals using any of the protocols mentioned above, or any other suitable communication protocol. A second connector 410 includes further data communication circuitry 415 for receiving the signals transmitted by connector 100. The data communication circuitry 415 may include two way communication capabilities to receive signals from connector 100 and to exchange commands and status information. Data communication circuitry 415 may control communication circuitry 138 and processing circuitry 136 by issuing commands and instructions. For example, data communication circuitry 415 may instruct communication circuitry 138 and processing circuitry 136 to process and transmit data at a predetermined rate or during a particular time slot. As a further example, data communication circuitry 415 may also instruct processing circuitry 136 to process the received signals using particular techniques or algorithms. Data communication circuitry 415 may instruct communication circuitry 138 and processing circuitry 136 to start up, shut down, or to activate another device, such as a relay or display.

Data communication circuitry 415 may also manage communication among multiple connectors by recognizing additional connectors as they communicate and assigning them different communication channels, for example, different frequencies, time slots, chipping codes, or other differentiating communication characteristics. Second connector 410 may optionally include an external emitting device 430. Second connector 410 may also communicate with connector 300 or multiple connectors 100, 300.

In an exemplary embodiment data communication circuitry 415 may be a ZigBee coordinator or a ZigBee router.

Second connector 400 may also have a power supply, for example, a battery for supplying power to data communication circuitry 415. Similar to some embodiments of connectors 100, 300, some embodiments of second connector 410 may have a form factor similar to a standard, standard ceramic, miniature, or miniature ceramic thermocouple connector body. Second connector 410 may also have male connector pins 420, 425 with cylindrical or blade shaped extending contacts.

Connector 410 may plug into an instrument, meter, or other suitable equipment (not shown) and provide signals from the sensor to the equipment. Thus, signals from the sensor may be provided without a hardwired connection between the sensor and the equipment.

Figure 6 shows yet another embodiment where the connector 100 communicates directly with an instrument, meter, or other suitable equipment 510. Equipment 510 may include data communication circuitry 515 for receiving the signals transmitted by connector 100. Equipment 510 may optionally include an external emitting device 520. The data communication circuitry 515 may include two way communication capabilities to receive signals from connector 100 and to exchange commands and status information. Data communication circuitry 515 may have all the capabilities of data communication circuitry 415 described above. Similar to data communication circuitry 415 described above, data communication circuitry 515 may also manage communication among multiple connectors by recognizing additional connectors as they communicate and assigning them different communication channels, for example, different frequencies, time slots, chipping codes, or other differentiating communication characteristics. In an exemplary embodiment, data communication circuitry 515 may be a ZigBee coordinator or a ZigBee router.

Equipment 510 may include test and measurement capabilities. For example, equipment 510 may be any one or any combination of a pressure, temperature, humidity, gas, pH, infrared, ultraviolet, visible light, voltage, current, power, conductivity, strain, or acceleration meter or test equipment. Similar to other embodiments, signals from the sensor 200 may be provided without a hardwired connection between the sensor and the equipment 510. Equipment 510 may also communicate with connector 300 having a built in sensor as described above.

Equipment 510 may include circuitry 520 for driving a display to present data related to the received signal in human readable form. The equipment 510 may also include processing circuitry 515 for further conditioning the received signal and process control circuitry 525 for controlling an external process 530 using the received signal or an output of processing circuitry 515.

Other embodiments of connector 100 may be included as part of a thermocouple assembly, imbedded into a thermocouple head and well assembly, or into a thermocouple package or housing. Connector 100 may be connected to thermocouple assemblies, pressure transducers, load cells, anemometers, and other sensors, as well as RTDs and thermistors. Alternately, the components of connector 100 may be incorporated into these and other types of assemblies.

Thus, the disclosed embodiments provide a mechanism to utilize multiple sensors without the drawbacks of multiple hardwired connections. The disclosed embodiments generally eliminate the need for wires from sensors to controllers, or between sensors and controllers, or between sensors and any computing device.

The disclosed embodiments provide a connector with circuitry for processing a signal and a transmitter for transmitting the processed signal. The disclosed embodiments also provide a connector includes a sensor for providing a signal, circuitry for processing the signal, and a transmitter for transmitting the processed signal. Further embodiments include a connector system having a first connector with circuitry for processing a signal and a transmitter for transmitting the processed signal, and a second connector having a receiver for receiving the transmitted signal. Still further embodiments provide a system for test and measurement including a connector including circuitry for processing a signal and a transmitter for transmitting the processed signal, and an instrument including a receiver for receiving the transmitted signal.

It should be understood that the foregoing description is only illustrative of the present embodiments. Various alternatives and modifications can be devised by those skilled in the art without departing from the embodiments disclosed herein. Accordingly, the embodiments are intended to embrace all such alternatives, modifications and variances which fall within the scope of the appended claims.

## Claims

1. A connector comprising:
circuitry for processing a signal; and
a transmitter for transmitting the processed signal.

2. The connector of claim 1 further comprising a sensor connected to the circuitry for providing the signal.

3. A connector comprising
a sensor for providing a signal;
circuitry for processing the signal; and
a transmitter for transmitting the processed signal.

4. The connector of claim 3, wherein the circuitry for processing the signal includes a memory for storing the signal for later transmission.

5. A connector system comprising:
a first connector including circuitry for processing a signal and a transmitter for transmitting the processed signal; and
a second connector including a receiver for receiving the transmitted signal.

6. The connector of claim 5, wherein the circuitry for processing the signal includes a memory for storing the signal for later transmission.

7. The connector of claim 6, wherein the circuitry for processing the signal operates to monitor a connection between the transmitter and receiver and to cause the signal to be stored when the connection is lost.

8. The connector of claim 7, wherein the circuitry for processing the signal further operates to send the stored signal when the connection is restored.

9. The connector system of claim 4, wherein the second connector provides the received signal to process control circuitry.

10. The connector system of claim 4, wherein the second connector further comprises circuitry for processing the received signal.

11. The connector system of claim 6, wherein the second connector provides the processed received signal to process control circuitry.

12. A system for test and measurement comprising:
a connector including first circuitry for processing a signal and a transmitter for transmitting the processed signal; and
an instrument including a receiver for receiving the transmitted signal.

13. The system of claim 12, wherein the instrument further comprises circuitry for displaying the received signal.

14. The system of claim 12, wherein the instrument further comprises circuitry for controlling a process using the received signal.

15. The system of claim 12, wherein the instrument further comprises circuitry for further processing the received signal.
